# DEMANDE DE BREVET EUROPEEN

(11) **EP 3 618 362 A1**
(43) Date de publication de la demande: **04.03.2020**
(21) Numéro de dépôt: 19186364.6
(22) Date de dépôt: 15.07.2019
(51) Int. Cl.: H04L 12/40, H04L 12/46

(54) **RÉSEAU DE COMMUNICATION EMBARQUÉ D'UN VÉHICULE, ÉQUIPEMENT ABONNÉ D'UN TEL RÉSEAU DE COMMUNICATION ET PROCÉDÉ CORRESPONDANT**

(30) Priorité: 03.09.2018 FR 1857887
(71) Demandeur: AIRBUS OPERATIONS (S.A.S.), 31060 Toulouse (FR)
(72) Inventeur: LOPEZ, Juan, 31060 TOULOUSE Cedex 9 (FR)
(74) Mandataire: Sarraméa, Claude

(57) **Abrégé**

Le réseau (5) de communication embarqué d'un véhicule est un réseau Ethernet commuté déterministe utilisant des liens virtuels, comportant un ensemble d'équipements abonnés (10a, 10b, ... 10g) et un ensemble de commutateurs (12a, 12b, ... 12h) dans lequel les communications sont réalisées de façon redondante. Pour gérer la redondance, chaque trame de données (24) émise sur un lien virtuel (VL1_{A}, VL1_{B}) comporte un numéro de trame dans un champ de numérotation (SN) de ladite trame. Les équipements abonnés émetteur et/ou récepteur du lien virtuel prennent en compte une longueur du champ de numérotation égale à une première longueur prédéterminée lorsque la valeur de BAG associée au lien virtuel est supérieure ou égale à une valeur de BAG prédéterminée, sinon égale à une deuxième longueur prédéterminée, supérieure à la première longueur.

## Description

L'invention est relative au domaine des réseaux de communication et plus particulièrement aux réseaux de communication embarqués dans les véhicules, notamment les aéronefs.

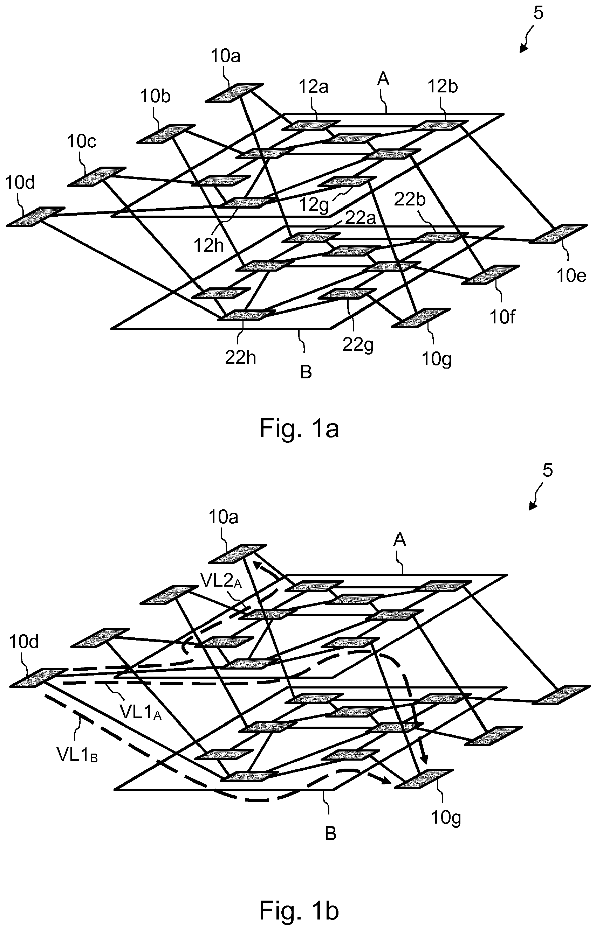

Les aéronefs comportent généralement un ou plusieurs réseaux de communication embarqués prévus pour permettre des communications entre des équipements embarqués, en particulier des calculateurs embarqués. Afin de satisfaire aux exigences de la règlementation en matière de certification des aéronefs, un réseau de communication embarqué doit être déterministe, c'est-à-dire qu'il doit permettre une transmission d'informations d'un équipement émetteur abonné à ce réseau de communication vers un ou plusieurs équipements récepteurs abonnés à ce réseau de communication, avec une durée de transmission inférieure à une durée prédéterminée ainsi qu'une garantie de non perte d'information à travers le réseau. Le standard ARINC 664 part 7 définit un réseau de communication avionique embarqué déterministe, basé sur une technologie Ethernet full-duplex. Un tel réseau peut par exemple correspondre à un réseau de communication AFDX®. Dans un réseau conforme au standard ARINC 664 part 7, chaque équipement abonné au réseau de communication est relié à un commutateur du réseau et les communications entre les différents équipements empruntent des liens virtuels prédéfinis lors de la définition et de la configuration du réseau. Un lien virtuel est défini entre un équipement émetteur et un ou plusieurs équipements récepteurs, via un ou plusieurs commutateurs du réseau. Chaque lien virtuel emprunte un chemin déterminé dans le réseau. Une bande passante est allouée à chaque lien virtuel et le routage des différents liens virtuels du réseau est réalisé de façon à ce que la somme des bandes passantes allouées aux liens virtuels empruntant une même liaison physique ne dépasse pas la bande passante supportée par ladite liaison physique. Cela est nécessaire pour garantir le déterminisme du réseau. Toutes les communications entre équipements sont définies à l'avance, par la définition des liens virtuels, afin de permettre une configuration des commutateurs : chaque commutateur comporte une table de configuration fonction des liens virtuels transitant par ce commutateur. La configuration de chaque commutateur est téléchargée dans celui-ci avant son utilisation. Afin de garantir une disponibilité suffisante des communications entre les différents équipements, le réseau de communication 5 est redondé selon deux couches A et B comme dans l'exemple représenté sur la figure1a : les commutateurs, les liaisons physiques et les liens virtuels sont dupliqués à l'identique sur chacune des couches A et B. Ces deux couches A et B forment ainsi deux réseaux élémentaires indépendants. Les différents équipements reliés au réseau de communication comportent chacun deux interfaces réseau reliées respectivement aux couches A et B du réseau de communication. Ainsi, le réseau représenté sur la figure comporte des commutateurs 12a, 12b, ... 12h sur la couche A et des commutateurs similaires à ceux-ci, respectivement 22a, 22b, ... 22h sur la couche B. Chacun des abonnés 10a, 10b, ... 10g au réseau de communication est relié à deux commutateurs similaires des deux couches A et B : par exemple, l'abonné 10a est relié aux commutateurs 12a et 22a, l'abonné 10d est relié aux commutateurs 12h et 22h, l'abonné 10e est relié aux commutateurs 12b et 22b, etc. Un lien virtuel VL1, permettant des communications de l'abonné 10d vers l'abonné 10g, est représenté sur la figure 1b. Cette figure est similaire à la figure 1a, des références ayant été supprimées pour améliorer la lisibilité. En pratique, le lien virtuel VL1 correspond à un lien virtuel VL1_{A} sur la couche A (via les commutateurs 12h et 12g) et à un lien virtuel VL1_{B} sur la couche B (via les commutateurs 22h et 22g). Ces deux liens virtuels sont identiques, tant en ce qui concerne leurs caractéristiques (bande passante...) que leur numéro VL1. Les trames de données transmises sur le réseau de communication sont ainsi transmises de façon redondante sur chacun des réseaux élémentaires indépendants correspondant aux couches A et B. Afin de permettre la gestion de la redondance en réception, un numéro de trame est ajouté à chaque trame de données transmise, dans un champ de numérotation de ladite trame de données transmise. Ce numéro de trame est parfois aussi appelé numéro de séquence. Ainsi, par exemple, l'abonné 10d transmet chaque trame de données, avec le même numéro de trame, à la fois sur le lien virtuel VL1_{A} et sur le lien virtuel VL1_{B}. Le numéro de trame est incrémenté pour chaque nouvelle trame transmise sur le lien virtuel considéré. En réception, lorsque l'abonné récepteur 10g reçoit une trame de données transmise sur le lien virtuel VL1 par l'abonné 10d, l'abonné 10g analyse la trame de données reçue de façon à identifier le champ de numérotation et il lit le numéro de trame correspondant. S'il n'avait pas encore reçu de trame de données correspondant à ce numéro de trame au cours d'un intervalle de temps prédéterminé précédant la réception de la trame, l'abonné 10g accepte la trame de données reçue. S'il avait déjà reçu une trame de données correspondant à ce numéro de trame au cours de l'intervalle de temps prédéterminé, l'abonné 10g rejette la trame de données reçue. Ainsi, un abonné récepteur n'accepte que la première trame reçue parmi les deux occurrences redondantes d'une même trame de données transmise sur un lien virtuel. L'utilisation d'un tel numéro de trame pour gérer la redondance du réseau de communication est par exemple décrite dans le brevet EP1.309.131 B1 de la demanderesse. La longueur du champ de numérotation utilisée dans les réseaux de communication conformes au standard ARINC664 part 7 est de 8 bits. Cette longueur convient bien pour les réseaux de communication pour lesquels le débit des communications est inférieur ou égal à 100Mbits/s. Sur un tel réseau de communication, l'intervalle de temps minimal entre l'envoi de deux trames consécutives sur un même lien virtuel, appelé BAG (« Bandwidth Allocation Gap » en anglais), est généralement choisi parmi les valeurs suivantes : 1ms, 2ms, 4ms, 8ms, 16ms, 32ms, 64ms, 128ms. Le champ de numérotation de longueur 8 bits permet de coder des valeurs de numéro de trame comprises entre 1 et 255. Lorsque le numéro de trame arrive à 255, le numéro de trame revient à 1 pour la trame suivante. Pour la valeur de BAG la plus petite, c'est-à-dire 1ms, un même numéro de trame est ainsi réutilisé toutes les 255ms. Cette durée est suffisante pour garantir un comportement satisfaisant du réseau de communication en cas de perturbations (parasites, foudre, etc.), ces perturbations durant en pratique moins de 255ms.

A l'avenir, il serait souhaitable de pouvoir utiliser des débits de communications plus élevés, par exemple 1 Gbits/s. La valeur du BAG pour un tel débit serait choisie parmi les valeurs suivantes: 62,5µs, 0,125ms, 0,25ms, 0,5ms, 1ms, 2ms, 4ms, 8ms, 16ms, 32ms, 64ms, 128ms, 256ms, 512ms. Pour une valeur de BAG égale à 62,5µs, un même numéro de trame serait réutilisé toutes les 15,81ms (soit 255 x 62,5µs). Or, des perturbations du réseau de communication peuvent durer plusieurs millisecondes, parfois plus de 15,81ms. Il en résulte que la gestion de la redondance des communications serait très délicate dans un tel cas. Il existe donc un besoin pour permettre la gestion de la redondance des communications dans un réseau de communication comprenant des liens virtuels ayant un débit plus élevé que celui des réseaux actuels, tout en garantissant l'inter-compatibilité avec des équipements communiquant sur d'autres liens virtuels avec un débit classique inférieur ou égal à 100Mbits/s.

Le document « Architecting ARINC 664, part 7 (AFDX) Solutions - Application note : Virtex-4 and Virtex-5 F » par Ian Land et Jeff Elliott - version 1.0.1, 22 mai 2009, ainsi que le document WO 2015/012454 A1 décrivent des réseaux de communication selon l'art antérieur.

### EXPOSE DE L'INVENTION :

La présente invention a notamment pour but d'apporter une solution à ce besoin. Elle concerne un réseau de communication embarqué d'un véhicule, le réseau de communication étant un réseau Ethernet commuté déterministe utilisant des liens virtuels, ce réseau de communication comprenant :
- au moins deux réseaux élémentaires indépendants ;
- un équipement abonné émetteur d'un desdits liens virtuels ; et
- au moins un équipement abonné récepteur dudit lien virtuel,
dans lequel l'abonné émetteur et l'abonné récepteur comprennent chacun une table de configuration contenant des paramètres de configuration dudit lien virtuel et sont en outre :
- chacun connectés à chacun des réseaux élémentaires ; et
- configurés de telle façon que lors de la transmission d'une trame de données par l'abonné émetteur vers l'abonné récepteur sur ledit lien virtuel :
   - l'abonné émetteur ajoute à ladite trame un champ de numérotation contenant un numéro de trame et envoie ladite trame sur chacun des réseaux élémentaires ; et
   - l'abonné récepteur, lorsqu'il reçoit une trame, lit la valeur du numéro de trame contenu dans le champ de numérotation de la trame reçue, accepte cette trame si cette valeur ne correspond pas à un numéro de trame reçue préalablement au cours d'un intervalle de temps et, refuse cette trame si cette valeur correspond à un numéro de trame reçue préalablement au cours dudit intervalle de temps.
Le réseau de communication est remarquable en ce que :
- l'abonné émetteur est configuré pour lire, dans sa table de configuration, une valeur de BAG associée au lien virtuel et pour ajouter ledit champ de numérotation à ladite trame, selon une longueur du champ de numérotation correspondant à :
   - une première longueur prédéterminée lorsque la valeur de BAG associée au lien virtuel est supérieure ou égale à une valeur de BAG prédéterminée ; et
   - une deuxième longueur prédéterminée, supérieure à la première longueur, lorsque la valeur de BAG associée au lien virtuel est inférieure à cette valeur de BAG prédéterminée, et
- l'abonné récepteur est configuré pour lire, dans sa table de configuration, une valeur de BAG associée au lien virtuel et pour lire la valeur du numéro de trame contenu dans le champ de numérotation de la trame reçue, selon une longueur du champ de numérotation correspondant à :
   - ladite première longueur prédéterminée lorsque la valeur de BAG associée au lien virtuel est supérieure ou égale à ladite valeur de BAG prédéterminée ; et
   - ladite deuxième longueur prédéterminée, lorsque la valeur de BAG associée au lien virtuel est inférieure à cette valeur de BAG prédéterminée.

Ainsi, ledit équipement abonné émetteur du réseau de communication peut envoyer des trames de données vers ledit équipement abonné récepteur sur un premier lien virtuel tel que la valeur de BAG associée à ce premier lien virtuel est inférieure à la valeur de BAG prédéterminée. La longueur du champ de numérotation correspond alors à la deuxième longueur prédéterminée. L'équipement abonné émetteur et l'équipement abonné récepteur peuvent en outre communiquer avec d'autres abonnés du réseau de communication, via d'autres liens virtuels tels que la valeur de BAG associée à ces autres liens virtuels est supérieure ou égale à la valeur de BAG prédéterminée. La longueur du champ de numérotation correspond alors à la première longueur prédéterminée, par exemple égale à 8 bits lorsque les autres liens virtuels ont un débit classique inférieur ou égal à 100Mbits/s. Etant donné que la deuxième longueur prédéterminée est supérieure à la première longueur prédéterminée, la valeur maximale possible pour le numéro de trame est plus élevée pour le premier lien virtuel que pour les autres liens virtuels. Cela est particulièrement intéressant lorsque le débit du premier lien virtuel est plus élevé que celui des autres liens virtuels, par exemple égal à 1 Gbits/s. En effet, cette valeur maximale plus élevée du numéro de trame implique un intervalle temporel plus élevé avant la réutilisation d'un même numéro de trame, ce qui permet de résoudre les problèmes de l'art antérieur pour des valeurs de BAG plus faibles que celles correspondant aux liens virtuels ayant un débit classique. L'invention permet en même temps la compatibilité de communication de l'abonné émetteur et de l'abonné récepteur avec lesdits autres abonnés, via les autres liens virtuels pour lesquels la longueur du champ de numérotation correspond à la première longueur prédéterminée par exemple égale 8 bits.

L'invention est également relative à un équipement abonné d'un réseau de communication embarqué d'un véhicule, ledit réseau de communication étant un réseau Ethernet commuté déterministe utilisant des liens virtuels, ce réseau de communication comprenant :
- au moins deux réseaux élémentaires indépendants ;
- un équipement abonné émetteur d'un desdits liens virtuels et au moins un équipement abonné récepteur dudit lien virtuel, parmi lesquels ledit équipement abonné du réseau de communication,
l'équipement abonné du réseau de communication étant connecté à chacun des réseaux élémentaires et comprennent une table de configuration contenant des paramètres de configuration dudit lien virtuel,
l'équipement abonné du réseau de communication étant en outre configuré de telle façon que :
- lorsqu'il agit en tant qu'abonné émetteur lors de la transmission d'une trame de données par l'abonné émetteur vers l'abonné récepteur sur ledit lien virtuel, l'équipement abonné du réseau de communication ajoute à ladite trame un champ de numérotation contenant un numéro de trame et envoie ladite trame sur chacun des réseaux élémentaires ; et
- lorsqu'il agit en tant qu'abonné récepteur lors de la transmission de ladite trame de données par l'abonné émetteur vers l'abonné récepteur sur ledit lien virtuel, l'équipement abonné du réseau de communication, lorsqu'il reçoit une trame, lit la valeur du numéro de trame contenu dans le champ de numérotation de la trame reçue, accepte cette trame si cette valeur ne correspond pas à un numéro de trame reçue préalablement au cours d'un intervalle de temps et, refuse cette trame si cette valeur correspond à un numéro de trame reçue préalablement au cours dudit intervalle de temps.

L'équipement abonné du réseau de communication est remarquable en ce que :
- lorsqu'il agit en tant qu'abonné émetteur lors de la transmission d'une trame de données par l'abonné émetteur vers l'abonné récepteur sur ledit lien virtuel, l'équipement abonné du réseau de communication est configuré pour lire, dans sa table de configuration, une valeur de BAG associée au lien virtuel et pour ajouter ledit champ de numérotation à ladite trame, selon une longueur du champ de numérotation correspondant à :
   - une première longueur prédéterminée lorsque la valeur de BAG associée au lien virtuel est supérieure ou égale à une valeur de BAG prédéterminée ; et
   - une deuxième longueur prédéterminée, supérieure à la première longueur, lorsque la valeur de BAG associée au lien virtuel est inférieure à cette valeur de BAG prédéterminée, et/ou
- lorsqu'il agit en tant qu'abonné récepteur lors de la transmission de ladite trame de données par l'abonné émetteur vers l'abonné récepteur sur ledit lien virtuel, l'équipement abonné du réseau de communication est configuré pour lire, dans sa table de configuration, une valeur de BAG associée au lien virtuel et pour lire la valeur du numéro de trame contenu dans le champ de numérotation de la trame reçue, selon une longueur du champ de numérotation correspondant à :
   - ladite première longueur prédéterminée lorsque la valeur de BAG associée au lien virtuel est supérieure ou égale à ladite valeur de BAG prédéterminée ; et
   - ladite deuxième longueur prédéterminée, lorsque la valeur de BAG associée au lien virtuel est inférieure à cette valeur de BAG prédéterminée.

L'invention est également relative à un procédé de communication dans un véhicule (1) comprenant un réseau (5) de communication embarqué de type réseau Ethernet commuté déterministe utilisant des liens virtuels, ce réseau de communication comprenant :
- au moins deux réseaux élémentaires indépendants ;
- un équipement abonné émetteur d'un desdits liens virtuels et au moins un équipement abonné récepteur dudit lien virtuel,
l'abonné émetteur et l'abonné récepteur étant chacun connectés à chacun des réseaux élémentaires et comprenant chacun une table de configuration contenant des paramètres de configuration dudit lien virtuel,
le procédé comprenant une étape de transmission d'une trame de données par l'abonné émetteur vers l'abonné récepteur sur ledit lien virtuel, cette étape de transmission comprenant les sous-étapes suivantes mises en oeuvre par l'abonné émetteur :
- d'ajout à ladite trame d'un champ de numérotation contenant un numéro de trame ; et
- d'envoi de ladite trame sur chacun des réseaux élémentaires,
ainsi qu'une sous-étape de réception d'une trame par l'abonné récepteur, au cours de laquelle l'abonné récepteur lit la valeur du numéro de trame contenu dans le champ de numérotation de la trame reçue, accepte cette trame si cette valeur ne correspond pas à un numéro de trame reçue préalablement au cours d'un intervalle de temps et, refuse cette trame si cette valeur correspond à un numéro de trame reçue préalablement au cours dudit intervalle de temps.

Le procédé est remarquable en ce que :
- la sous-étape d'ajout à ladite trame, par l'abonné émetteur, d'un champ de numérotation contenant le numéro de trame, comprend la lecture par l'abonné émetteur, dans sa table de configuration, d'une valeur de BAG associée au lien virtuel, l'ajout dudit champ de numérotation à ladite trame étant réalisé selon une longueur du champ de numérotation correspondant à :
   - une première longueur prédéterminée lorsque la valeur de BAG associée au lien virtuel est supérieure ou égale à une valeur de BAG prédéterminée ; et
   - une deuxième longueur prédéterminée, supérieure à la première longueur, lorsque la valeur de BAG associée au lien virtuel est inférieure à cette valeur de BAG prédéterminée,
et en ce que :
- la sous-étape de réception d'une trame par l'abonné récepteur comprend la lecture par l'abonné récepteur, dans sa table de configuration (28), d'une valeur de BAG associée au lien virtuel, la lecture par l'abonné récepteur de la valeur du numéro de trame contenu dans le champ de numérotation de la trame reçue étant réalisée selon une longueur du champ de numérotation correspondant à :
   - ladite première longueur prédéterminée lorsque la valeur de BAG associée au lien virtuel est supérieure ou égale à ladite valeur de BAG prédéterminée ; et
   - ladite deuxième longueur prédéterminée, lorsque la valeur de BAG associée au lien virtuel est inférieure à cette valeur de BAG prédéterminée.

Selon des modes particuliers de réalisation pouvant être combinés entre eux :
- la première longueur prédéterminée est égale à 8 bits ;
- ladite valeur de BAG prédéterminée est choisie dans l'intervalle [0,1ms ; 1ms], de préférence dans l'intervalle [0,5ms ; 1ms] ;
- la deuxième longueur prédéterminée est choisie dans l'intervalle [10 bits ; 32 bits], de préférence dans l'intervalle [16 bits ; 32 bits], en particulier égale à 32 bits.

L'invention est également relative à un véhicule, en particulier un aéronef, comportant un réseau de communication tel que précité.

### DESCRIPTION DETAILLEE :

L'invention sera mieux comprise à la lecture de la description qui suit et à l'examen des figures annexées.
Les figures 1a et 1b, déjà décrites, illustrent de façon simplifiée un exemple de réseau de communication Ethernet commuté déterministe utilisant des liens virtuels.
La figure 2 représente de façon schématique un abonné dudit réseau de communication.
La figure 3 illustre une trame de données prévue pour être échangée sur un lien virtuel d'un réseau de communication Ethernet commuté déterministe.
La figure 4 représente un aéronef comprenant un réseau de communication conforme à un mode de réalisation de l'invention.

Le réseau de communication 5 représenté sur les figures 1a et 1b comprend deux réseaux élémentaires indépendants. Dans l'exemple représenté sur les figures, un premier desdits réseaux élémentaires indépendants est illustré par une couche A et le deuxième desdits réseaux élémentaires indépendants est illustré par une couche B du réseau de communication 5. Le premier réseau élémentaire (couche A) comporte un ensemble de commutateurs 12a, 12b ... 12h, ainsi qu'un ensemble de liaisons physiques définies chacune entre deux commutateurs dudit ensemble de commutateurs. De façon similaire, le deuxième réseau élémentaire (couche B) comporte un ensemble de commutateurs 22a, 22b ... 22h, ainsi qu'un ensemble de liaisons physiques définies chacune entre deux commutateurs dudit ensemble de commutateurs. Le réseau de communication comporte également un ensemble d'équipements abonnés 10a, 10b ... 10g, reliés chacun à un commutateur du premier réseau élémentaire et à un commutateur du deuxième réseau élémentaire. Un équipement abonné 10d est émetteur d'un lien virtuel VL1. Au moins un équipement abonné 10g est récepteur dudit lien virtuel VL1. Le lien virtuel VL1 est mis en oeuvre au moyen de deux occurrences VL1_{A} et VL1_{B} dudit lien virtuel, l'occurrence VL1_{A} passant par le premier réseau élémentaire (couche A) et l'occurrence VL1_{B} passant par le deuxième réseau élémentaire (couche B).

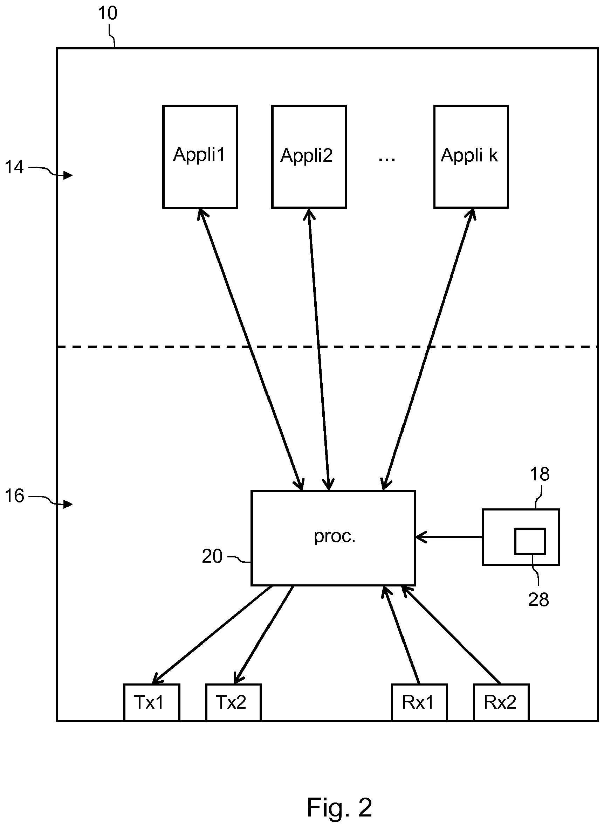

L'architecture fonctionnelle d'un abonné générique 10, correspondant à l'un quelconque des abonnés 10a, 10b ... 10g du réseau de communication est illustrée par la figure 2. L'abonné 10 comporte une partie applicative 14 et une partie interface réseau 16 (aussi appelée « End User » en anglais). La partie applicative comprend un ensemble d'applications appli1, appli2 ... appli k. La partie interface réseau 16 comprend une unité de traitement 20 (libellée « proc » sur la figure), reliée à une mémoire de configuration 18. Cette mémoire de configuration contient par exemple une ou plusieurs tables de configuration 28. La partie interface réseau 16 comprend en outre deux ports de communication en émission Tx1 et Tx2 vers le réseau de communication, ainsi que deux ports de communication en réception Rx1 et Rx2 du réseau de communication. L'unité de traitement 20 est reliée aux deux ports de communication en émission Tx1 et Tx2 et aux deux ports de communication en réception Rx1 et Rx2. Lorsque l'abonné 10 est raccordé au réseau de communication et correspond par exemple à l'un des abonnés 10a, 10b ... 10g précités, le port Tx1 est relié à un commutateur du premier réseau élémentaire d'une part et le port Tx2 est relié à un autre commutateur du deuxième réseau élémentaire d'autre part, ce qui permet deux liaisons redondantes et ségréguées entre l'abonné 10 et d'autres abonnés, via ces deux commutateurs et le réseau de communication. De façon similaire, le port Rx1 est relié à ce commutateur du premier réseau élémentaire d'une part et le port Rx2 est relié à cet autre commutateur du deuxième réseau élémentaire d'autre part. L'unité de traitement 20 met en oeuvre un gestionnaire de communications configuré pour d'une part envoyer sur les deux ports de communication Tx1 et Tx2 des trames de données correspondant à des données reçues des applications appli1, appli2 ... appli k et, d'autre part envoyer vers ces applications des données correspondant à des trames de données reçues sur les ports de communication Rx1 et Rx2.

En fonctionnement, lorsque l'abonné 10 agit en tant qu'émetteur, lors de l'envoi d'une trame de données de façon redondante sur les ports Tx1 et Tx2, l'unité de traitement 20 ajoute un numéro de trame dans un champ de numérotation de ladite trame, afin de permettre la gestion de la redondance par un abonné récepteur. Lorsque l'abonné 10 agit en tant que récepteur, lors de la réception d'une trame sur l'un des ports Rx1 ou Rx2, l'unité de traitement 20 lit la valeur du numéro de trame contenu dans le champ de numérotation de la trame reçue. L'unité de traitement 20 accepte cette trame si cette valeur ne correspond pas à un numéro de trame reçue préalablement au cours d'un intervalle de temps précédant la réception de ladite trame et, refuse cette trame si cette valeur correspond à un numéro de trame reçue préalablement au cours dudit intervalle de temps. Ainsi, un récepteur du réseau de communication n'accepte que la première parmi deux trames redondantes reçues sur un lien virtuel, ce qui permet de gérer la redondance. Une valeur possible dudit intervalle de temps est par exemple de 65,535ms (soit 2¹⁶ microsecondes).

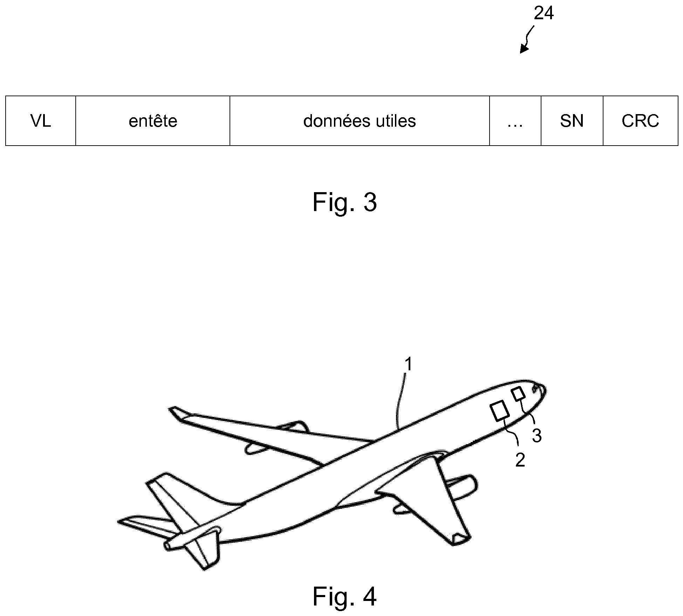

Un exemple de trame de données échangée sur un lien virtuel entre un abonné émetteur et un abonné récepteur est illustré sur la figure 3. Cette trame de données 24 comprend notamment le numéro du lien virtuel VL, des informations d'entête, des données utiles, un champ de numérotation SN et un champ de contrôle correspondant par exemple à un code de redondance cyclique CRC.

La mémoire de configuration 18 comprend au moins une table de configuration 28 contenant des informations relatives aux différents liens virtuels pour lesquels l'abonné 10 est émetteur ou récepteur. Parmi ces informations, pour chacun desdits liens virtuels, la table de configuration contient une valeur de BAG associée à ce lien virtuel. Comme indiqué précédemment, le BAG (« Bandwidth Allocation Gap » en anglais) correspond à l'intervalle de temps minimal entre l'envoi de deux trames consécutives sur un même lien virtuel.

Conformément à un mode de réalisation de l'invention, lorsque l'abonné 10 agit en tant qu'émetteur sur un lien virtuel, lors de l'envoi d'une trame de données, l'unité de traitement 20 dudit abonné lit, dans la table de configuration de la mémoire 18, une valeur de BAG associée au lien virtuel. L'unité de traitement 20 ajoute le champ de numérotation à la trame de données, selon une longueur du champ de numérotation correspondant à :
- une première longueur prédéterminée lorsque la valeur de BAG associée au lien virtuel est supérieure ou égale à une valeur de BAG prédéterminée ; et
- une deuxième longueur prédéterminée, supérieure à la première longueur, lorsque la valeur de BAG associée au lien virtuel est inférieure à cette valeur de BAG prédéterminée.

Lorsque l'abonné 10 agit en tant que récepteur sur un lien virtuel, lors de la réception d'une trame de données, l'unité de traitement 20 dudit abonné lit, dans la table de configuration de la mémoire 18, une valeur de BAG associée au lien virtuel. L'unité de traitement 20 lit la valeur du numéro de trame contenu dans le champ de numérotation de la trame reçue, selon une longueur du champ de numérotation correspondant à :
- ladite première longueur prédéterminée lorsque la valeur de BAG associée au lien virtuel est supérieure ou égale à ladite valeur de BAG prédéterminée ; et
- ladite deuxième longueur prédéterminée, lorsque la valeur de BAG associée au lien virtuel est inférieure à cette valeur de BAG prédéterminée.

Dans un mode de réalisation, la première longueur prédéterminée est égale à 8 bits, ce qui correspond à la longueur du champ de numérotation utilisée de façon conventionnelle dans les réseaux de communication ayant un débit classique inférieur ou égal à 100Mbits/s.

Dans un mode particulier de réalisation, la valeur de BAG prédéterminée est choisie dans l'intervalle [0,1ms ; 1ms], de préférence dans l'intervalle [0,5ms ; 1ms]. Par conséquent, lorsque le débit sur le lien virtuel considéré correspond à un débit classique inférieur ou égal à 100Mbits/s, pour lequel les valeurs de BAG possibles vont de 1ms à 512ms comme indiqué précédemment, la valeur du BAG pour le lien virtuel considéré est supérieure ou égale à ladite valeur de BAG prédéterminée. Il en résulte que l'équipement abonné 10, lorsqu'il agit en tant qu'émetteur, va émettre une trame de données sur le lien virtuel avec une longueur du champ de numérotation égale à la première longueur prédéterminée, par exemple 8 bits qui correspond à la longueur du champ de numérotation dans un réseau de communication ayant un débit classique inférieur ou égal à 100Mbits/s. De façon similaire, lorsque l'équipement abonné 10 agit en tant que récepteur, il lit le numéro d'une trame reçue en considérant la longueur du champ de numérotation égale à la première longueur prédéterminée, par exemple 8 bits. Lorsque le débit sur le lien virtuel considéré correspond à un débit plus élevé, par exemple 1 Gbits/s, des valeurs de BAG possibles vont notamment de 62,5µs à 0,125ms comme indiqué précédemment : de telles valeurs du BAG pour le lien virtuel considéré sont inférieures à ladite valeur de BAG prédéterminée. Il en résulte que l'équipement abonné 10, lorsqu'il agit en tant qu'émetteur, va émettre une trame de données sur le lien virtuel avec une longueur du champ de numérotation égale à la deuxième longueur prédéterminée. De façon similaire, lorsque l'équipement abonné 10 agit en tant que récepteur, il lit le numéro d'une trame reçue en considérant la longueur du champ de numérotation égale à la deuxième longueur prédéterminée.

De façon avantageuse, la deuxième longueur prédéterminée est choisie dans l'intervalle [10 bits; 32 bits], de préférence dans l'intervalle [16 bits ; 32 bits], en particulier égale à 32 bits. Une telle longueur de 32 bits présente l'avantage d'être facile à manipuler avec les processeurs modernes. La deuxième longueur prédéterminée étant supérieure à la première longueur prédéterminée, elle permet d'obtenir un intervalle de temps suffisant entre deux occurrences consécutives d'un même numéro de trame sur un lien virtuel, même avec un débit de 1 Gbits/s.

Etant donné que la longueur de champ de numérotation est fonction de la valeur du BAG pour le lien virtuel considéré, un même équipement abonné du réseau de communication peut communiquer (en tant qu'émetteur ou en tant que récepteur) aussi bien avec un débit de 1Gbits/s sur un premier lien virtuel avec au moins un autre équipement prévu également pour communiquer avec un tel débit, qu'avec un débit classique inférieur ou égal à 100Mbits/s sur un deuxième lien virtuel, avec au moins un autre équipement qui peut être prévu pour communiquer seulement avec un tel débit classique. Cela présente l'avantage de pouvoir utiliser dans un même réseau de communication, aussi bien des équipements conformes à des modes de réalisation de l'invention, que des équipements préexistants prévus pour communiquer seulement avec un débit classique : le réseau de communication est alors configuré de telle façon que des liens virtuels reliant uniquement des équipements abonnés compatibles avec un débit plus élevé, par exemple 1Gbits/s, sont configurés pour utiliser un tel débit plus élevé ; des liens virtuels reliant des équipements abonnés parmi lesquels au moins un équipement abonné est compatible seulement avec un débit classique sont eux configurés pour utiliser un débit classique inférieur ou égal à 100Mbis/s. Cela permet ainsi des communications avec un débit plus élevé que les débits classiques, entre équipements abonnés compatibles, tout en gardant la compatibilité avec les équipements préexistants qui sont prévus seulement pour un débit classique. Dans l'exemple représenté sur la figure 1b, les équipements 10d et 10g sont conformes à un mode de réalisation de l'invention : par conséquent, ils peuvent communiquer entre eux sur le lien virtuel VL1 (formé des liens virtuels VL1_{A} et VL1_{B}) avec un débit plus élevé que le débit classique, par exemple un débit de 1 Gbits/s. Les valeurs de débit et de BAG pour ce lien virtuel sont configurées dans les tables de configuration desdits équipements. L'équipement abonné 10a est lui un équipement préexistant, prévu pour communiquer uniquement avec un débit classique. Il est relié à l'équipement abonné 10d par un lien virtuel VL2 (formé de façon similaire de deux liens virtuels VL2_{A} et VL2_{B} sur les deux réseaux élémentaires, seul le lien virtuel VL2_{A} étant représenté pour des raisons de clarté de la figure). Etant donné que l'équipement abonné 10a ne peut communiquer qu'avec un débit classique, les tables de configuration des équipements abonnés 10a et 10d sont configurées avec des valeurs de débit et de BAG pour le lien virtuel VL2 correspondant à un débit classique inférieur ou égal à 100Mbits/s.

Selon un mode de réalisation, les différents équipements abonnés 10a, 10b ... 10g sont configurés pour communiquer sur le réseau de communication selon un protocole de communication compatible avec le standard ARINC 664 part 7.

L'invention est également relative à un véhicule, en particulier un aéronef 1 tel que représenté sur la figure 4, mettant en oeuvre un réseau de communication 5 tel que précité. Les équipements abonnés et les commutateurs sont par exemple localisés dans une soute avionique 2 à proximité du cockpit 3 de l'aéronef.

## Revendications

1. Réseau (5) de communication embarqué d'un véhicule (1), ledit réseau de communication étant un réseau Ethernet commuté déterministe utilisant des liens virtuels, ce réseau de communication comprenant :
- au moins deux réseaux élémentaires indépendants (A, B) ;
- un équipement abonné (10d) émetteur d'un desdits liens virtuels ; et
- au moins un équipement abonné (10g) récepteur dudit lien virtuel (VL1_{A}, VL1_{B})),
dans lequel l'abonné émetteur et l'abonné récepteur comprennent chacun une table de configuration (28) contenant des paramètres de configuration dudit lien virtuel et sont en outre :
- chacun connectés à chacun des réseaux élémentaires (A, B) ; et
- configurés de telle façon que lors de la transmission d'une trame de données (24) par l'abonné émetteur vers l'abonné récepteur sur ledit lien virtuel :
• l'abonné émetteur ajoute à ladite trame un champ de numérotation (SN) contenant un numéro de trame et envoie ladite trame sur chacun des réseaux élémentaires ; et
• l'abonné récepteur, lorsqu'il reçoit une trame, lit la valeur du numéro de trame contenu dans le champ de numérotation (SN) de la trame reçue, accepte cette trame si cette valeur ne correspond pas à un numéro de trame reçue préalablement au cours d'un intervalle de temps et, refuse cette trame si cette valeur correspond à un numéro de trame reçue préalablement au cours dudit intervalle de temps,
**caractérisé en ce que** :
- l'abonné émetteur est configuré pour lire, dans sa table de configuration (28), une valeur de BAG associée au lien virtuel (VL1_{A}, VL1_{B}) et pour ajouter ledit champ de numérotation à ladite trame, selon une longueur du champ de numérotation correspondant à :
• une première longueur prédéterminée lorsque la valeur de BAG associée au lien virtuel est supérieure ou égale à une valeur de BAG prédéterminée ; et
• une deuxième longueur prédéterminée, supérieure à la première longueur, lorsque la valeur de BAG associée au lien virtuel est inférieure à cette valeur de BAG prédéterminée, et
- l'abonné récepteur est configuré pour lire, dans sa table de configuration (28), une valeur de BAG associée au lien virtuel et pour lire la valeur du numéro de trame contenu dans le champ de numérotation (SN) de la trame reçue, selon une longueur du champ de numérotation correspondant à :
• ladite première longueur prédéterminée lorsque la valeur de BAG associée au lien virtuel est supérieure ou égale à ladite valeur de BAG prédéterminée ; et
• ladite deuxième longueur prédéterminée, lorsque la valeur de BAG associée au lien virtuel est inférieure à cette valeur de BAG prédéterminée.

2. Réseau de communication selon la revendication 1, **caractérisé en ce que** la première longueur prédéterminée est égale à 8 bits.

3. Réseau de communication selon la revendication 2, **caractérisé en ce que** ladite valeur de BAG prédéterminée est choisie dans l'intervalle [0,1ms ; 1ms], de préférence dans l'intervalle [0,5ms ; 1ms].

4. Réseau de communication selon l'une des revendications 2 ou 3, **caractérisé en ce que** la deuxième longueur prédéterminée est choisie dans l'intervalle [10 bits ; 32 bits], de préférence dans l'intervalle [16 bits ; 32 bits], en particulier égale à 32 bits.

5. Equipement abonné (10d, 10g) d'un réseau (5) de communication embarqué d'un véhicule (1), ledit réseau de communication étant un réseau Ethernet commuté déterministe utilisant des liens virtuels, ce réseau de communication comprenant :
- au moins deux réseaux élémentaires indépendants (A, B) ;
- un équipement abonné (10d) émetteur d'un desdits liens virtuels et au moins un équipement abonné (10g) récepteur dudit lien virtuel (VL1_{A}, VL1_{B}), parmi lesquels ledit équipement abonné du réseau de communication, l'équipement abonné du réseau de communication étant connecté à chacun des réseaux élémentaires (A, B) et comprennent une table de configuration (28) contenant des paramètres de configuration dudit lien virtuel, l'équipement abonné du réseau de communication étant en outre configuré de telle façon que :
- lorsqu'il agit en tant qu'abonné émetteur lors de la transmission d'une trame de données (24) par l'abonné émetteur (10d) vers l'abonné récepteur (10g) sur ledit lien virtuel, l'équipement abonné du réseau de communication ajoute à ladite trame un champ de numérotation (SN) contenant un numéro de trame et envoie ladite trame sur chacun des réseaux élémentaires ; et
- lorsqu'il agit en tant qu'abonné récepteur lors de la transmission de ladite trame de données (24) par l'abonné émetteur (10d) vers l'abonné récepteur (10g) sur ledit lien virtuel, l'équipement abonné du réseau de communication, lorsqu'il reçoit une trame, lit la valeur du numéro de trame contenu dans le champ de numérotation (SN) de la trame reçue, accepte cette trame si cette valeur ne correspond pas à un numéro de trame reçue préalablement au cours d'un intervalle de temps et, refuse cette trame si cette valeur correspond à un numéro de trame reçue préalablement au cours dudit intervalle de temps,
**caractérisé en ce que** :
- lorsqu'il agit en tant qu'abonné émetteur lors de la transmission d'une trame de données (24) par l'abonné émetteur vers l'abonné récepteur sur ledit lien virtuel, l'équipement abonné du réseau de communication est configuré pour lire, dans sa table de configuration (28), une valeur de BAG associée au lien virtuel (VL1_{A}, VL1_{B}) et pour ajouter ledit champ de numérotation à ladite trame, selon une longueur du champ de numérotation correspondant à :
• une première longueur prédéterminée lorsque la valeur de BAG associée au lien virtuel est supérieure ou égale à une valeur de BAG prédéterminée ; et
• une deuxième longueur prédéterminée, supérieure à la première longueur, lorsque la valeur de BAG associée au lien virtuel est inférieure à cette valeur de BAG prédéterminée, et/ou
- lorsqu'il agit en tant qu'abonné récepteur lors de la transmission de ladite trame de données (24) par l'abonné émetteur vers l'abonné récepteur sur ledit lien virtuel, l'équipement abonné du réseau de communication est configuré pour lire, dans sa table de configuration (28), une valeur de BAG associée au lien virtuel et pour lire la valeur du numéro de trame contenu dans le champ de numérotation de la trame reçue, selon une longueur du champ de numérotation correspondant à :
• ladite première longueur prédéterminée lorsque la valeur de BAG associée au lien virtuel est supérieure ou égale à ladite valeur de BAG prédéterminée ; et
• ladite deuxième longueur prédéterminée, lorsque la valeur de BAG associée au lien virtuel est inférieure à cette valeur de BAG prédéterminée.

6. Equipement abonné d'un réseau de communication selon la revendication 5, **caractérisé en ce que** la première longueur prédéterminée est égale à 8 bits.

7. Equipement abonné d'un réseau de communication selon la revendication 6, **caractérisé en ce que** ladite valeur de BAG prédéterminée est choisie dans l'intervalle [0,1ms ; 1ms], de préférence dans l'intervalle [0,5ms ; 1ms].

8. Equipement abonné d'un réseau de communication selon l'une des revendications 6 ou 7, **caractérisé en ce que** la deuxième longueur prédéterminée est choisie dans l'intervalle [10 bits ; 32 bits], de préférence dans l'intervalle [16 bits ; 32 bits], en particulier égale à 32 bits.

9. Procédé de communication dans un véhicule (1) comprenant un réseau (5) de communication embarqué de type réseau Ethernet commuté déterministe utilisant des liens virtuels, ce réseau de communication comprenant :
- au moins deux réseaux élémentaires (A, B) indépendants ;
- un équipement abonné (10d) émetteur d'un desdits liens virtuels et au moins un équipement abonné (10g) récepteur dudit lien virtuel (VL1_{A}, VL1_{B}), l'abonné émetteur et l'abonné récepteur étant chacun connectés à chacun des réseaux élémentaires (A, B) et comprenant chacun une table de configuration (28) contenant des paramètres de configuration dudit lien virtuel,
le procédé comprenant une étape de transmission d'une trame de données (24) par l'abonné émetteur vers l'abonné récepteur sur ledit lien virtuel, cette étape de transmission comprenant les sous-étapes suivantes mises en oeuvre par l'abonné émetteur :
- d'ajout à ladite trame d'un champ de numérotation (SN) contenant un numéro de trame ; et
- d'envoi de ladite trame sur chacun des réseaux élémentaires,
ainsi qu'une sous-étape de réception d'une trame par l'abonné récepteur, au cours de laquelle l'abonné récepteur lit la valeur du numéro de trame contenu dans le champ de numérotation de la trame reçue, accepte cette trame si cette valeur ne correspond pas à un numéro de trame reçue préalablement au cours d'un intervalle de temps et, refuse cette trame si cette valeur correspond à un numéro de trame reçue préalablement au cours dudit intervalle de temps,
le procédé étant **caractérisé en ce que** :
- la sous-étape d'ajout à ladite trame, par l'abonné émetteur, d'un champ de numérotation contenant le numéro de trame, comprend la lecture par l'abonné émetteur, dans sa table de configuration (28), d'une valeur de BAG associée au lien virtuel (VL1_{A}, VL1_{B}), l'ajout dudit champ de numérotation à ladite trame étant réalisé selon une longueur du champ de numérotation correspondant à :
• une première longueur prédéterminée lorsque la valeur de BAG associée au lien virtuel est supérieure ou égale à une valeur de BAG prédéterminée ; et
• une deuxième longueur prédéterminée, supérieure à la première longueur, lorsque la valeur de BAG associée au lien virtuel est inférieure à cette valeur de BAG prédéterminée,
et **en ce que** :
- la sous-étape de réception d'une trame par l'abonné récepteur comprend la lecture par l'abonné récepteur, dans sa table de configuration (28), d'une valeur de BAG associée au lien virtuel, la lecture par l'abonné récepteur de la valeur du numéro de trame contenu dans le champ de numérotation de la trame reçue étant réalisée selon une longueur du champ de numérotation correspondant à :
• ladite première longueur prédéterminée lorsque la valeur de BAG associée au lien virtuel est supérieure ou égale à ladite valeur de BAG prédéterminée ; et
• ladite deuxième longueur prédéterminée, lorsque la valeur de BAG associée au lien virtuel est inférieure à cette valeur de BAG prédéterminée.

10. Véhicule, **caractérisé en ce qu'**il comprend un réseau de communication (5) selon l'une quelconque des revendications 1 à 4.
